Europäisches Patentamt

European Patent Office

Office européen des brevets

(11) Veröffentlichungsnummer: **0 306 806 B1**

(12) **EUROPÄISCHE PATENTSCHRIFT**

(45) Veröffentlichungstag der Patentschrift: **15.09.93**

(51) Int. Cl.5: **C08F 265/04**, C08L 51/04

(21) Anmeldenummer: **88114113.9**

(22) Anmeldetag: **30.08.88**

(54) **Verfahren zur Herstellung von Pfropfpolymerisaten.**

(30) Priorität: **09.09.87 DE 3730205**

(43) Veröffentlichungstag der Anmeldung:
**15.03.89 Patentblatt 89/11**

(45) Bekanntmachung des Hinweises auf die
Patenterteilung:
**15.09.93 Patentblatt 93/37**

(84) Benannte Vertragsstaaten:
**DE FR GB IT**

(56) Entgegenhaltungen:
**EP-A- 0 077 038**

**CHEMICAL ABSTRACTS, Band 93, 1980, Seite
41, Zusammenfassung Nr. 240502d, Columbus, Ohio, US**

**CHEMICAL ABSTRACTS, Band 90, 1979, Seite
17, Zusammenfassung Nr. 152853d, Columbus, Ohio, US**

**WPIL, FILE SUPPLIER, AN=86-085951, Derwent Publications Ltd, London, GB**

(73) Patentinhaber: **BAYER AG**

**D-51368 Leverkusen(DE)**

(72) Erfinder: **Lindner, Christian, Dr.**
**Riehler Strasse 200**
**D-5000 Köln 60(DE)**
Erfinder: **Piejko, Karl-Erwin, Dr.**
**Unterscheider Weg 7a**
**D-5060 Bergisch-Gladbach 2(DE)**
Erfinder: **Jansen, Ulrich, Dr.**
**Stürzelberger Strasse 50**
**D-4047 Dormagen 5(DE)**
Erfinder: **Wittmann, Dieter, Dr.**
**Doerperhofstrasse 15**
**D-4150 Krefeld(DE)**

**Beschreibung**

Die Erfindung betrifft ein Verfahren zur Herstellung von Pfropfpolymerisaten harzbildender Monomerer auf einen Acrylatkautschuk, in welchem durch Verwendung eines Initiatorsystems aus einem organischen Hydroperoxid und Ascorbinsäure Pfropfpolymerisate mit besonders guten anwendungstechnischen Eigenschaften hergestellt werden. Die erhaltenen Pfropfpolymerisate eignen sich als thermoplastische Formmassen oder als Bestandteile solcher Massen.

Pfropfpolymerisate harzbildender Monomerer auf Kautschuk sind bekannt und haben sich zur Herstellung von Formkörpern bewährt. Bei der Herstellung solcher Pfropfpolymerisate durch radikalische Polymerisation bilden sich als Nebenprodukte freie Polymerisate der harzbildenden Monomeren. Die Verhältnisse sind durch "Pfropfgrad" und "Pfropfausbeute" quantitativ beschrieben, d.h. durch das Gewichtsverhältnis der pfropfpolymerisierten Monomeren zur (Kautschuk)Pfropfgrundlage und das Gewichtsverhältnis der pfropfpolymerisierten Monomeren zu den gesamten Pfropfmonomeren. Wird der Pfropfgrad bei den Pfropfpolymerisaten durch bekannte Maßnahmen vergrößert (und meist gleichzeitig auch die Pfropfausbeute), so wird normalerweise auch das "Rubber phase volume" angehoben (siehe dazu C.B. Bucknall: Toughened Plastics, Appl. Science Publishers, London, 1977, S. 112). Mit "rubber phase volume" bezeichnet man das wirksame Volumen der Kautschukteilchen bezogen auf das Gesamtvolumen des Pfropfpolymerisats. Es gehören dazu also auch Harzeinschlüsse im Innern der (netzwerk- oder schwammartigen) Kautschukteilchen. Solches chemisch an den Kautschuk gebundene (gepfropfte) aber includierte Harz verschlechtert das Erweichungsverhalten des Kautschuks in der Nähe von dessen Glasübergangstemperatur, d.h. die Kautschukerweichungstemperatur (z.B. bestimmt durch dynamomechanische Messungen) verschiebt sich nach höheren Temperaturen. Bei Pfropfpolymerisaten auf Dienkautschuken mit sehr tiefen Glasübergangs-und Erweichungstemperaturen überwiegen die Vorteile eines hohen Pfropfgrads die Nachteile durch die Erhöhung des "Rubber phase volume", weil die Erweichungstemperatur der Dienkautschuke zur praktischen Anwendung immer noch niedrig genug ist.

Bei Pfropfpolymerisaten auf Acrylatkautschuke, die oxidations- und alterungsbeständiger sind, ist eine Anhebung der Kautschukerweichungstemperatur schädlich, weil sie schon recht hoch und sogar im Bereich praxis-relevanter Temperaturen liegt. Andererseits wird auch in Pfropfpolymerisaten auf Acrylatkautschuken ein hoher Pfropfgrad gefordert (z.B. um gute Materialeigenschaften bei Gebrauchstemperatur sowie Verträglichkeit mit thermoplastischen Harzen zu erreichen), allerdings ohne Erhöhung der Erweichungstemperatur des Acrylatkautschuks.

Die japanische Patentanmeldung 80094915 (Chemical Abstracts Bd. 93, 1980, Seite 41, Zusammenfassung Nr. 240502d) betrifft die Herstellung eines Acrylatkautschuks mit Hilfe eines Initiators aus Wasserstoffperoxid und L-Ascorbinsäure. Hierzu wird der Kautschuk, der als Pfropfgrundlage dient, selbst hergestellt und zwar mit einem wasserlöslichen Initiator, der kein Hydroperoxid enthält. Im Gegensatz dazu wird erfindungsgemäß ein Pfropfpolymerisat hergestellt, für das der Kautschuk als Ausgangsprodukt dient, und es wird ein Initiator auf Hydroperoxidbasis verwendet.

Es wurde gefunden, daß man mit Hilfe von Ascorbinsäure enthaltenden Katalysatorsystemen Pfropfpolymerisate auf Acrylatkautschuk mit hohem Pfropfgrad erhält, ohne das Erweichungsverhalten des Acrylatkautschuks zu verschlechtern.

Gegenstand der Erfindung ist ein Verfahren zur Herstellung von Pfropfpolymerisaten auf Acrylatkautschuken aus

a) 15-85 Gew.-%, insbesondere 20-75 Gew.-% eines partiell vernetzten teilchenförmigen Acrylatkautschuks mit mittlerem Teilchendurchmesser von 0,07-2 $\mu$m und Gelgehalt von 50-99% als Pfropfbasis

b) 85-15 Gew.-%, insbesondere 80-25 Gew.-% Styrol, p-Methylstyrol, $\alpha$-Methylstyrol, Acrylnitril, Methylmethacrylat, oder Mischungen daraus als Pfropfmonomere,

worin die Monomeren b) in Emulsion in einer Emulsion des Acrylatkautschuks a) bei Temperaturen von 50 bis 80°C mit einem Initiatorsystem aus einem aromatischen Hydroperoxid (I) und Ascorbinsäure (II) polymerisiert werden, wobei 0,1-1 Gew.-Teile (I) und 0,03-0,8 Gew.-Teile (II), jeweils bezogen auf 100 Gew.-Teile Monomer b), eingesetzt werden, das Gewichtsverhältnis (I)/(II) 1 bis 5, insbesondere 1-4, beträgt und der pH-Wert während der Pfropfpolymerisation kleiner 11, insbesondere von 7-2, ist.

Ebenfalls Gegenstand der Erfindung sind die so erhaltenen Pfropfpolymerisate.

Ein weiterer Gegenstand der Erfindung sind thermoplastische Formmassen, aus wenigstens einem erfindungsgemäß hergestellten Pfropfpolymerisat und wenigstens einem thermoplastischen Harz z.B. Styrol-Acrylnitril-Copolymer, $\alpha$-Methylstyrol-Acrylnitril-Copolymer, Polyvinylchlorid (PVC), ABS und ASA. (ABS bzw. ASA sind Kunststoffe enthaltende mit Styrol/Acrylnitril-Copolymerisatharz (SAN) bepfropfte Dienkautschuke (ABS) bzw. Acrylatkautschuke (ASA), und Mischungen solcher bepfropften Kautschuke mit SAN-harz oder AMS-Harz ($\alpha$-Methylstyrol-Acrylnitril-Copolymerisatharz).

Pfropfpolymerisate im Sinne der Erfindung können durch Polymerisation von harzbildenden Monomeren in Gegenwart eines Acrylatkautschuks erhalten werden, wenn ein ein großer Teil des Polymerisat der harzbildenden Monomeren pfropfpolymerisiert ist und das Erweichungsverhalten des Kautschuks nicht verschlechtert worden ist. Kautschuke im Sinne der Erfindung sind wenigstens partiell vernetzte, teilchenförmige Polymerisate von $C_1$-$C_8$-Alkyl-, insbesondere $C_2$-$C_6$-Alkylacrylsäureestern, gegebenenfalls mit bis zu 20 Gew.-% copolymerisierten Monomeren wie Vinylacetat, Acrylnitril, Styrol, Vinylether, Butadien. Zur Vernetzung der Kautschuke können geringe Mengen (bis zu 3 Gew.-% bezogen auf die zu polymerisierenden Monomeren) polyfunktioneller Vinyl- oder Alkylmonomerer einpolymerisiert werden, z.B. Divinylbenzol, Diol-bis-acrylat, Diol-bis-acrylamide, Trivinylbenzol, Allyl(meth)acrylat, Triallylcyanurat, Triallylisocyanurat, Triallylphosphat, Triallylcitrat. Besonders günstige Ergebnisse hat die erfindungsgemäße Pfropfpolymerisation, wenn die vernetzenden Monomeren mehr als zwei copolymerisierbare Gruppen pro Monomermolekül enthalten; besonders vorteilhaft sind vernetzende Monomere mit drei copolymerisierbaren ungesättigten Gruppen gleicher Reaktivität wie Triallylcyanurat, Triallylisocyanurat, Triallylcitrat, Triallylphosphat, besonders bevorzugt ist Triallylcyanurat, Triallylisocyanurat.

Die Kautschuke sind wenigstens partiell vernetzt und besitzen Gelgehalte von 50 bis 99 Gew.-% insbesondere von 60 bis 95 Gew.-%; sie sind teilchenförmig mit mittleren Teilchendurchmessern ($d_{50}$) von 0,07 bis 2 $\mu$m. Dise an sich bekannten Kautschuke werden durch Emulsionspolymerisation hergestellt und liegen meist als Latices vor. Besonders geeignete Acrylatkautschuke besitzen eine Kern/Mantel-Struktur gemäß dem europäischen Patent 34 748.

Erfindungsgemäß können die Pfropfpolymerisate in wäßriger Emulsion durch Polymerisation der Monomeren auf einen in wäßriger Emulsion vorliegenden Kautschuk hergestellt werden. Dabei werden üblicherweise Emulgatoren oder Dispergatoren eingesetzt, sowie gegebenenfalls Zusätze, um bestimmte pH-Werte und Elektrolytgehalte bei der Pfropfpolymerisation einzustellen. Man kann auch die Emulsions-Pfropfpolymerisation ohne Emulgatorzusatz durchführen, insbesondere dann, wenn man mit geringen Monomermengen arbeitet, bezogen auf die Kautschukmenge, oder wenn die in der Kautschukemulsion enthaltenen Mengen an Emulgator bereits ausreichen, um die Pfropfpolymerisation der Monomeren im Emulsionszustand bei genügender Emulsionsstabilität zu gewährleisten.

Besonders geeignet sind bekannte Emulgatoren, die bei pH-Werten ≤ 11 wirken, Besondere geeignet sind anionische Emulgatoren, vorzugsweise Alkali-Salze von sulfonierten Fettsäuren oder Harzsäuren, Alkylsulfonsäuren, Arylsulfonsäuren. Sie werden in Mengen bis zu 5 Gew.-%, vorzugsweise bis zu 2,5 Gew.-%, bezogen auf die zu polymerisierenden Monomeren, eingesetzt.

Geeignet als Hydroperoxid ist beispielsweise Cumolhydroperoxid.

Thermoplastische Harze im Sinne der Erfindung sind z.B. Styrol-Acrylnitril-Copolymerisate, welche gegebenenfalls zusätzlich Styrol einpolymerisiert enthalten, Polyvinylchlorid und Acrylnitril-Butadien-Styrol-Polymerisate ("ABS-Kunststoffe"), Acrylnitril-Styrol-Acrylat-Polymerisate ("ASA-Kunststoffe"). (Zur Definition vgl. oben).

Das erfindungsgemäße Verfahren kann beispielsweise wie folgt durchgeführt werden:
Eine wäßrige Emulsion eines partiell vernetzten Acrylatkautschuks wird diskontinuierlich oder kontinuierlich in wäßriger Emulsion bepfropft; bei Polymerisationstemperaturen von 50 bis 80 °C wird die Kautschukemulsion mit den Pfropfmonomeren sowie gegebenenfalls zusätzlichem Emulgator und Hydroperoxid sowie Ascorbinsäurelösungen sowie gegebenenfalls Säure versetzt. Dabei werden die Mengenverhältnisse und pH-Werte, wie oben beschrieben, eingehalten. Zur Polymerisation können als weitere Komponente des Startersystems katalytisch wirksame Mengen Schwermetallkationen, insbesondere $Fe^{2+}$, zugefügt werden. Normalerweise wird ohne Zusatz von Eisenionen gearbeitet.

Bei bestimmten Kombinationen von Pfropfmonomeren und bei bestimmten Gewichtsverhältnissen von Pfropfmonomeren zu Kautschuk kann jedoch die Pfropfpolymerisation durch Metallionen günstig beeinflußt werden, insbesondere mit Eisenionenmengen bis zu 30 ppm, bezogen auf eingesetzte Pfropfmonomere; die Verwendung von Eisen ist günstig, wenn man $\alpha$-Methylstyrol polymerisiert oder mit einem Pfropfmonomeren/Kautschuk-Verhältnis kleiner 1 arbeitet. Das Verfahren benutzt grundsätzlich wäßrige Lösung von Ascorbinsäure und wäßrige Lösungen von Hydroperoxid; vorteilhaft ist es, nicht genügend wasserlösliche Hydroperoxide wie Cumolhydroperoxid, in Form einer wäßrigen Emulsion in das Polymerisationssystem einzuspeisen. In solchen Emulsionen wird vorteilhaft der gleiche Emulgator eingesetzt wie in der Pfropfpolymerisation.

Das Hydroperoxid und die Ascorbinsäure können portionsweise oder kontinuierlich in die Pfropfpolymerisation eindosiert werden. Bevorzugt wird ein Teil des Hydroperoxids mit dem zu bepfropfenden Kautschuk in den Reaktoren vorgelegt; die Pfropfmonomeren sowie die restliche Ascorbinsäure, Hydroperoxid und gegebenenfalls Emulgator werden mit fortschreitender Polymerisation der Pfropfmonomeren separat in den Reaktor eingespeist. Metallionen werden - wenn überhaupt - zumeist bei der Polymerisation vorgelegt.

Die Mengen Hydroperoxid und Ascorbinsäure sind kritisch. Bei Überdosierung von Hydroperoxid und/oder Ascorbinsäure wird die Pfropfpolymerisation beeinträchtigt. Die Pfropfausbeute geht zurück; das Molekulargewicht der gepfropften und des freien Harzes wird geringer; Unter-oder Überschreitung der Mengen an Hydroperoxid und Ascorbinsäure kann sich außerdem empfindlich auf Monomerumsatz und Emulsionsstabilität auswirken, so daß die technische Realisierung der Pfropfpolymerisation unmöglich wird. Um die Durchführung des Verfahrens, die Struktur der Pfropfpolymerisate und deren physikalische Eigenschaften zu optimieren, sind bei der Pfropfpolymerisation die genannten Bedingungen und die oben angegebenen Hydroperoxid/Ascorbinsäuremengen unbedingt einzuhalten.

Bei der Pfropfpolymerisation bis zu Monomerumsätzen von größer 90 Gew.-%, insbesondere größer 98 Gew.-%, fallen lagerstabile Pfropfpolymeremulsionen mit Polymerisatgehalten von 25 bis 50 Gew.-% an; das Pfropfpolymerisat selbst läßt sich gut aus den Emulsionen durch bekannte Koagulationsverfahren (z.B. mit Säuren oder Salzen) isolieren. Will man die Pfropfpolymerisate mit thermoplastischen Harzen kombinieren, die selbst als Emulsion vorliegen, so kann man die Pfropfpolymerisatemulsion mit der Harzemulsion mischen und gemeinsam koagulieren.

Die erfindungsgemäßen Pfropfpolymerisate zeichnen sich durch besonders günstige thermoplastisch-elastische Eigenschaften aus, die sich beispielsweise im Spannungsdehnungsverhalten und im Modul zeigen; sie können vorteilhaft verwendet werden, wenn kautschukartiges Verhalten in Kombination mit Steifigkeit gefordert wird, also zur Herstellung von Gummiartikeln, die nicht vulkanisiert werden müssen. Das Alterungsverhalten und Temperaturstabilitätsverhalten der Produkte ist besonders gut.

Andererseits stellen sie wertvolle Komponenten für thermoplastische Formmassen dar, z.B. zur Herstellung hochkerbschlagzäher Formkörper mit außergewöhnlichen Eigenschaftskombinationen z.B. von Wärmestandfestigkeit und Kerbschlagzähigkeit bzw. Modulverhalten und Kerbschlagzähigkeit. Insbesondere eignen sie sich zur Mischung mit PVC; die resultierenden Formmassen können durch Extrusion oder Spritzguß zu Formkörpern verarbeitet werden, insbesondere zu Rohren, Platten, Großbehältern oder Folien.

Beispiele

1) Eingesetzte Polymerisate

1.1) Polyvinylchlorid (PVC) mit einem K-Wert von 70
1.2) Styrol-Acrylnitril-Copolymerisate (SAN-Harze) mit einem Acrylnitrilgehalt von 26 Gew.-% und einem Staudingerindex $[\eta]$ von 0,73 dl/g (in Dimethylformamid bei 23°C).

2) Zur Pfropfpolymerherstellung eingesetzte Acrylkautschuklatices

2.1) Acrylatkautschuklatex
In einem Reaktor werden vorgelegt:
17232 Gew.-Teile Wasser und 588 Gew.-Teile eines Polybutadienkautschuklatex mit einem Polymerfeststoffgehalt von 42 Gew.-% und einem mittleren Teilchendurchmesser ($d_{50}$) von 140 nm. Nach Aufheizen auf 63°C gibt man eine Lösung aus 49,2 Gew.-Teilen Kaliumperoxidisulfat und 1152 Gew.-Teile Wasser hinzu. Danach werden folgende Mischungen gleichzeitig innerhalb von 5 Stunden bei 63°C in den Reaktor eingespeist:

Lösung 1:   3600 Gew.-Teile n-Butylacrylat
81,6 Gew.-Teile Triallylcyanurat
Lösung 2:   40800 Gew.-Teile Wasser
384 Gew.-Teile $C_{14}$-$C_{18}$-Alkylsulfonsäuren-Na-Salz

Danach läßt man 4 Stunden bei 63°C auspolymerisieren. Es wird eine Emulsion mit einem Polymerfeststoffgehalt von 37 Gew.-% erhalten. Der mittlere Latexteilchendurchmesser ($d_{50}$) beträgt 480 nm. Das Polymerisat besitzt einen Gel-Gehalt von 93 Gew.-%. Der Acrylatkautschuk hat einen Erweichungspunkt von -49°C.
2.2) Acrylatkautschuklatex
Beispiel 2.1 wird wiederholt, aber mit folgender Änderung:
Anstatt Triallylcyanurat wird Butylenglykol-bis-methacrylat eingesetzt. Der Latex besitzt einen mittleren Teilchendurchmesser ($d_{50}$) von 490 nm; das Polymerisat besitzt einen Gelgehalt von 90 Gew.-%.

3) Erfindungsgemäße Pfropfpolymerisate und Vergleichsversuche

3.1) In einem Reaktor werden vorgelegt:
651 Gew.-Teile Latex 2.1) und 809 Gew.-Teile Wasser. Bei 60 bis 62°C gibt man folgende Lösungen hinzu:

| | |
|---|---|
| Lösung a) | 3,2 Gew.-Teile Cumolhydroperoxid |
| | 90 Gew.-Teile Wasser |
| Lösung b) | 0,5 Gew.-Teile Ascorbinsäure |
| | 50 Gew.-Teile Wasser |
| | 2,5 Gew.-Teile Eisen-II-sulfat-Lösung (0,1 %ig) |

Danach werden bei der angegebenen Temperatur folgende Lösungen in der angegebenen Zeit zudosiert:

| | |
|---|---|
| Lösung 1) | 674 Gew.-Teile $\alpha$-Methylstyrol |
| | 303 Gew.-Teile Acrylnitril Zudosierzeit: 6 Stunden |
| Lösung 2) | 350 Gew.-Teile Wasser |
| | 30 Gew.-Teile Na-Salz disproportionierter Abietinsäure |
| | 28 Gew.-Teile 1n-Natronlauge |
| | 4 Gew.-Teile Cumolhydroperoxid Zudosierzeit: 6 Stunden |
| Lösung 3) | 6 Gew.-Teile Ascorbinsäure |
| | 285 Gew.-Teile Wasser Zudosierzeit: 7 Stunden |

Auspolymerisationszeit: 4 Stunden bei 60 bis 62°C. Es wird eine Emulsion mit einem Feststoffgehalt von 35,8 % erhalten. Das Pfropfpolymerisat besitzt eine Pfropfausbeute von 62 Gew.-%. Der Acrylatkautschukanteil hat einen Erweichungspunkt von -56°C.

3.1.1) Die Polymerisation 3.1) wird wiederholt; anstatt des Latex 2.1) wird die entsprechende Menge des Latex 2.2) zur Polymerisation vorgelegt. Das Pfropfpolymerisat besitzt eine Pfropfausbeute von 55 Gew.-%.

3.1.2) Vergleichsversuch

In einem Reaktor werden vorgelegt:
651 Gew.-Teile Latex 2.1) und 809 Gew.-Teile Wasser. Bei 70°C gibt man eine Lösung von 6 Gew.-Teilen Kaliumperoxidisulfat in 90 Gew.-Teile Wasser hinzu. Danach dosiert man folgende Lösungen bei 70°C innerhalb von 6 Stunden hinzu:

| | |
|---|---|
| Lösung 1) | 674 Gew.-Teile $\alpha$-Methylstyrol |
| | 303 Gew.-Teile Acrylnitril |
| Lösung 2) | 800 Gew.-Teile Wasser |
| | 20 Gew.-Teile $C_{14}$-$C_{18}$-Alkylsulfonsäuren-Na-Salz |

Innerhalb von 4 Stunden bei 70°C wird auspolymerisiert; es wird eine Emulsion mit einem Feststoffgehalt von 36,5 Gew.-% erhalten. Das Pfropfpolymerisat besitzt eine Pfropfausbeute von 49 Gew.-%. Der Acrylatkautschukanteil hat einen Erweichungspunkt von -52°C.

3.2) In einem Reaktor werden vorgelegt:
119125 Gew.-Teile des Latex 2.1) und 23175 Gew.-Teile Wasser. Nach Aufheizen auf 60 bis 62°C gibt man folgende Lösungen hinzu:

| | |
|---|---|
| Lösung a) | 3750 Gew.-Teile Wasser |
| | 70 Gew.-Teile Cumolhydroperoxid |
| | 50 Gew.-Teile $C_{14}$-$C_{18}$-Alkylsulfonsäure-Na-Salz |
| Lösung b) | 20 Gew.-Teile Ascorbinsäure |
| | 1000 Gew.-Teile Wasser |
| | 62,5 Gew.-Teile wäßrige Fe(II)sulfat-Lösung (0,1 %ig) |

Anschließend werden innerhalb von 5 Stunden gleichmäßig folgende Lösungen bei 60 bis 62°C eindosiert:

| | |
|---|---|
| Lösung 1) | 21250 Gew.-Teile Styrol |
| | 8250 Gew.-Teile Acrylnitril |
| Lösung 2) | 37500 Gew.-Teile Wasser |
| | 375 Gew.-Teile $C_{14}$-$C_{18}$-Alkylsulfonsäure-Na-Salz |

Auspolymerisationszeit 4 Stunden bei 60 bis 62°C. Es wird eine Emulsion mit einem Feststoffgehalt von 35 Gew.-% erhalten. Das Pfropfpolymerisat besitzt eine Pfropfausbeute von 69 Gew.-%.

3.2.1 Vergleichsversuch

In einem Reaktor werden 113830 Gew.-Teile Latex 2.1) und 22972 Gew.-Teile Wasser vorgelegt. Bei 70°C gibt man eine Lösung von 147 Gew.-Teilen Kaliumperoxidisulfat in 4900 Gew.-Teilen Wasser hinzu. Danach dosiert man gleichzeitig folgende Lösung bei 70°C innerhalb von 5 Stunden in den Reaktor ein:

Lösung 1)    20384 Gew.-Teile Styrol

7913,5 Gew.-Teile Acrylnitril

Lösung 2)    700 Gew.-Teile $C_{12}$-$C_{14}$-Alkylsulfonsäure-Na-Salz

35525 Gew.-Teile Wasser

Auspolymerisationszeit 4 Stunden bei 70°C. Es wird eine Emulsion mit einem Feststoffgehalt von 34,7 Gew.-% erhalten. Das Pfropfpolymerisat besitzt eine Pfropfausbeute von 48 Gew.-%.

3.3) Aufarbeitung der Emulsion

Durch Zugabe von $MgSO_4$-Lösungen in Wasser bei 70 bis 95°C werden die Latices der Pfropfpolymerisate koaguliert, dann mit Wasser gewaschen und zu Pulvern getrocknet.

4) Eigenschaften der Pfropfpolymerisate Zur Herstellung von Formmassen werden die in nachstehender Tabelle 1) aufgeführten Komponenten in angegebenen Mengen vermischt; im Falle PVC-haltiger Mischungen wird als Stabilisator- und Gleitmittelzusatz 2 Gew.-% Ba/Cd-Laurat (fest), 0,3 Gew.-% sterisch gehindertes Antioxidanz (fest) und 0,2 Gew.-% Esterwachs zugesetzt; im Falle PVC-freier Compounds wird 2 Gew.-% Penta-erythrittetetrastearat zugesetzt. Die Formmassen werden auf einem Mischwalzwerk bei 180°C homogenisiert und bei 190°C zu Prüfkörpern verarbeitet.

6

## Tabelle 1  Zusammensetzung der Formmassen
Komponente (Gew.-Teile)

| Masse | 1.1 | 1.2 | 3.1 | 3.1.1 | 3.1.2 | 3.2 | 3.2.1 |
|-------|-----|-----|-----|-------|-------|-----|-------|
| 4,1 | 60 | | 40 | | | | |
| 4,2 | 60 | | | 40 | | | |
| 4,3 ˣ | 60 | | | | 40 | | |
| 4,4 | | 70,8 | | | | 29,2 | |
| 4,5 ˣ | | 70,8 | | | | | 29,2 |
| 4,6 | | | 100 | | | | |
| 4,7 ˣ | | | | | 100 | | |

ˣ Vergleichsversuch

EP 0 306 806 B1

Tabelle 2  Eigenschaften der Formmasse

| Masse | Schlagzähigkeit 20°C | -20°C | -40°C | Kerbschlagzähigkeit 20°C | 0°C | Vicat B (°C) 50°/h |
|---|---|---|---|---|---|---|
| 4,1 | ng[1] | | | 14,3 | | 93 |
| 4,2 | | 5/10[2] | | 12 | | 92 |
| 4,3 x | | 6/10[2] | | 13 | | 93 |
| 4,4 | ng[1] | | 51 | 14,5 | 7,0 | 101 |
| 4,5 x | ng[1] | | 51 | 7,7 | 6,0 | 101 |
| 4,6 | ng[1] | | | 12,3 | | 110 |
| 4,7 x | ng[1] | | | 3,5 | | 112 |

1) ng = nicht gebrochen
2) 6 bzw. 5 von 10 Prüfstäben sind nicht gebrochen
x Vergleichsversuch

Die Zähigkeitswerte wurden ermittelt nach DIN 53 453, die Wärmephasenbeständigkeit Vicat B nach DIN 53 460. Die angegebenen Teilchendurchmesser sind Mittelwerte und wurden durch Ultrazentrifugenmessung bestimmt.

Die Pfropfausbeute wurde bestimmt durch fraktionierende Entmischung mit den entmischenden Flüssigkeiten Dimethylformamid/Methylcyclohexan in der Ultrazentrifuge und durch Ermittlung der Mengen und der chemischen Zusammensetzung der so erhaltenen Fraktionen (siehe R. Kuhn, Makromol.-Chemie 177, 1525 (1976)).

8

Das Erweichungsverhalten der Produkte wurde durch Messung der Schubmodul-Temperaturabhängigkeiten in einem "Lonza"-Torsionsautomaten untersucht.

**Patentansprüche**

1. Verfahren zur Herstellung von Pfropfpolymerisaten auf Acrylatkautschuk aus
   a) 15-85 Gew.-% eines partiell vernetzten teilchenförmigen Acrylatkautschuks mit einem mittleren Teilchendurchmesser von 0,07-2 $\mu$m und Gelgehalt von 50-99% als Pfropfbasis und
   b) 85-15 Gew.-% Styrol, p-Methylstyrol, $\alpha$-Methylstyrol, Acrylnitril, Methylmethacrylat, oder Mischungen daraus als Pfropfmonomer,
   worin die Monomeren b) in Emulsion in einer Emulsion des Acrylatkautschuks a) bei Temperaturen von 50 bis 80°C mit einem Initiatorsystem aus aromatischem Hydroperoxid (I) und Ascorbinsäure (II) polymerisiert werden, wobei 0,1 bis 1 Gew.-Teile (I) und 0,03 bis 0,8 Gew.-Teile (II), jeweils bezogen auf 100 Gew.-Teile Monomer b), eingesetzt werden, das Gewichtsverhältnis (I)/(II) 1 bis 5 beträgt und der pH-Wert während der Pfropfpolymerisation kleiner 11 ist.

2. Verwendung der gemäß Anspruch 1 hergestellten Pfropfpolymerisate zur Herstellung thermoplastischer Formmassen durch Vermischen mit einem thermoplastischen Kunststoff.

3. Pfropfpolymerisate, hergestellt nach Anspruch 1.

**Claims**

1. Process for the preparation of graft polymers on acrylate rubber from
   a) 15 to 85% by weight of a partially cross-linked particulate acrylate rubber having an average particle diameter of from 0.07 to 2 $\mu$m and a gel content of from 50 to 99% as graft basis and
   b) 85 to 15% by weight of styrene, p-methylstyrene, $\alpha$-methylstyrene, acrylonitrile, methyl methacrylate or mixtures thereof as graft monomer,
   wherein the monomers b) are emulsion polymerised in an emulsion of the acrylate rubber a) at temperatures of from 50 to 80°C, using an initiator system of aromatic hydroperoxide (I) and ascorbic acid (II), from 0.1 to 1 part by weight of (I) and from 0.03 to 0.8 parts by weight of (II), based in each case on 100 parts by weight of monomer b), being used and the ratio by weight of (I)/(II) being from 1 to 5 and the pH during graft polymerisation being below 11.

2. Use of the graft polymers prepared according to Claim 1 for the preparation of thermoplastic moulding compounds by mixing them with a thermoplastic synthetic resin.

3. Graft polymers prepared according to Claim 1.

**Revendications**

1. Procédé de préparation de polymères greffés sur caoutchouc d'acrylate à partir de :
   a) 15 à 85 % en poids d'un caoutchouc d'acrylate partiellement réticulé, en particules à un diamètre moyen de 0,07 à 2 $\mu$m et à une teneur en gel de 50 à 99 %, servant de support de greffage, et
   b) 85 à 15 % en poids de styrène, de p-méthylstyrène, d'$\alpha$-méthylstyrène, d'acrylonitrile, de méthacrylate de méthyle ou leurs mélanges, en tant que monomères à greffer,
   dans lequel les monomères b) sont polymérisés en émulsion dans une émulsion du caoutchouc d'acrylate a) à des températures de 50 à 80°C à l'aide d'un système inducteur consistant en un hydroperoxyde aromatique I et l'acide ascorbique II, à raison de 0,1 à 1 partie en poids de I et 0,03 à 0,8 partie en poids de II, dans les deux cas pour 100 parties en poids des monomères b), les proportions relatives en poids I/II allant de 1 à 5 et le pH étant maintenu au-dessous de 11 durant la polymérisation greffée.

2. Utilisation des polymères greffés préparés selon la revendication 1, pour la préparation de matières à mouler thermoplastiques par mélange avec une résine synthétique thermoplastique.

3. Polymères greffés préparés selon la revendication 1.